(19) Europäisches Patentamt / European Patent Office / Office européen des brevets

(11) **EP 4 278 699 B1**

(12) **EUROPEAN PATENT SPECIFICATION**

(45) Date of publication and mention
of the grant of the patent:
**15.04.2026   Bulletin 2026/16**

(21) Application number: **21918550.1**

(22) Date of filing: **15.01.2021**

(51) International Patent Classification (IPC):
*H04L 5/00* (2006.01)        *H04W 74/0833* (2024.01)
*H04W 74/00* (2009.01)

(52) Cooperative Patent Classification (CPC):
**H04L 5/0098; H04W 74/0833;** H04L 5/001;
H04L 5/0053; H04L 5/0057; H04W 74/006

(86) International application number:
**PCT/CN2021/072124**

(87) International publication number:
**WO 2022/151343 (21.07.2022 Gazette 2022/29)**

(54) **ENABLING EARLY PDCCH ORDER FOR PUCCH SCELL ACTIVATION**

AKTIVIERUNG EINER FRÜHEN PDCCH-REIHENFOLGE ZUR PUCCH-SCELL-AKTIVIERUNG

ACTIVATION D'UN ORDRE PDCCH PRÉCOCE POUR UNE ACTIVATION DE PUCCH SCELL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**22.11.2023   Bulletin 2023/47**

(73) Proprietor: **Nokia Technologies Oy**
**02610 Espoo (FI)**

(72) Inventors:
• **DU, Lei**
**Beijing 100085 (CN)**
• **WU, Chunli**
**Beijing 102208 (CN)**
• **DALSGAARD, Lars**
**90230 Oulu (FI)**

(74) Representative: **Page White Farrer**
**Bedford House**
**21a John Street**
**London WC1N 2BF (GB)**

(56) References cited:
EP-A1- 3 528 582        EP-B1- 3 132 645
WO-A1-2016/149167       WO-A1-2020/263049
CN-A- 106 304 248       US-A1- 2019 230 563
US-A1- 2019 320 379     US-A1- 2020 029 383

**Description**

TECHNICAL FIELD:

The teachings in accordance with the exemplary embodiments of this invention relate generally to secondary cell activation and, more specifically, relate to enabling an early physical downlink control channel order for physical uplink control channel secondary cell activation.

BACKGROUND:

This section is intended to provide a background or context to the invention that is recited in the claims. The description herein may include concepts that could be pursued, but are not necessarily ones that have been previously conceived or pursued. Therefore, unless otherwise indicated herein, what is described in this section is not prior art to the description and claims in this application and is not admitted to be prior art by inclusion in this section.

Certain abbreviations that may be found in the description and/or in the Figures are herewith defined as follows:

| | |
|---|---|
| CSI | Channel-state information |
| CSI-RS | Channel-State Information Reference Signals |
| FR1 | Frequency range 1 |
| FR2 | Frequency range 2 |
| NG-RAN | New Generation - Radio Access Network |
| NW OoR | Network |
| PUCCH | Packet UL Control Channel |
| QCL | Quasi-Colocation |
| RRC | Radio resource control protocol |
| RRM | Radio resource management |
| RSRP | Reference Signal Received Power |
| RSRQ | Reference Signal Received Quality |
| SINR | Signal-to-Interference and noise ratio |
| SSB | Synchronization Signal Block |
| UE | User Equipment |

To meet demands for increased communications component carriers (Component Carriers, CC) can be aggregated and redirected to support a larger transmission bandwidth. Such aggregation may be classified using Primary Cells (PCell) and Secondary Cells (SCell). The SCell can be added during RRC reconfiguration to provide additional radio resources. The PCell and/or the SCell may be in an active state or a deactivated state. In a case that the SCell needs to be activated, the SCell may be activated by media access control (Media Access Control, MAC) layer control element (Control Element, CE) signaling.

The US patent application US 2020/0029383 describes a method of beam recovery using a SCell with a PDCCH order being transmitted by the PCell. European patent application EP 3 132 645 describes a network node initiating a RACH procedure via a PDCCH order for an activated SCell.

Example embodiments of the invention work to improve at least these types of operations.

SUMMARY:

The invention is defined by the independent claims. Embodiments are defined by the dependent claims.

BRIEF DESCRIPTION OF THE DRAWINGS:

The above and other aspects, features, and benefits of various embodiments of the present disclosure will become more fully apparent from the following detailed description with reference to the accompanying drawings, in which like reference signs are used to designate like or equivalent elements. The drawings are illustrated for facilitating better understanding of the embodiments of the disclosure and are not necessarily drawn to scale, in which:

FIG. 1 shows an LTE PUCCH SCell activation delay requirement;

FIG. 2 shows a possible LTE PDCCH order timings;

FIG. 3 shows single SCell activation delay in New Radio;

FIG. 4 shows how to trigger the PDCCH order for PUCCH SCell using legacy operations and using operations in accordance with an example embodiment of the invention; and

FIG. 5 shows how to trigger the PDCCH order for PUCCH SCell using legacy operations and using operations in accordance with an example embodiment of the invention;

FIG. 6 shows a comparison of PUCCH SCell activation timing between legacy and proposed methods in accordance with an example embodiment of the invention;

FIG. 7 shows activation timing in respective SCells when multiple SCells are being activated in accordance with an example embodiment of the invention;

FIG. 8 shows a high level block diagram of various devices used in carrying out various aspects of the invention; and

FIG. 9A and FIG. 9B each show a method in accordance with an example embodiment of the invention which may be performed by an apparatus.

DETAILED DESCRIPTION:

In example embodiments of the invention, there is provided a method and apparatus for at least enabling an early physical downlink control channel (PDCCH) order for physical uplink control channel (PUCCH) secondary cell activation.

Example embodiment of the invention relates to the 5G New Radio (NR) system and, in particular, it addresses how the UE is to activate the PUCCH SCell and its associated SCells in time-efficient way.

In NR - similar as in LTE, an SCell can be activated or deactivated. Based on the activation/deactivation mechanism of Scells defined, the goal is to enable reasonable UE battery consumption when CA is configured. When an SCell is deactivated, the UE does not need to receive the corresponding PDCCH or PDSCH, cannot transmit in the corresponding uplink, nor is it required to perform L1 measurements such e.g. CQI or CSI measurements on the SCell. UE is still required to perform RRM measurements in a deactivated SCell with relaxed performance.

When an SCell is activated and therefore become active, the UE shall receive PDSCH and PDCCH (if the UE is configured to monitor PDCCH from this SCell) and is required to perform L1 measurements such as e.g. CSI measurements and report those as configured. Additionally, the UE shall perform RRM measurements as on an active serving cell.

The transitions between activated and deactivated status are mainly based on the MAC control elements commands from the network. For instance, the SCell activation/deactivation MAC CEs are specified in 3GPP TS 38.321 to indicate if the SCell with an *SCellIndex* shall be activated or deactivated.

When the UE activates a deactivated SCell, it takes time i.e. activation delay $T_{activation\_time}$ to transit from deactivated to activated status. The requirements for the delay within which the UE shall be able to activate a deactivated SCell is defined in RAN4. In Rel15 the single SCell activation delay requirement for the UE configured with one downlink SCell i.e. $T_{activation\_time}$ is defined in 3GPP TS 38.133 section 8.3.2. Upon receiving SCell activation command in slot n, the UE shall be capable to transmit valid CSI report and apply actions related to the activation command for the SCell being activated no later than in slot $\dfrac{T_{HARQ}+T_{activation\_time}+T_{CSI\_Reporting}}{NR\ slot\ length}$, by which the SCell is considered to be activated (and hence, the UE can be scheduled). In Rel-16 RAN4 also defined UE requirements for activation of multiple SCells.

In 3GPP Rel.17, a new work item [1] was approved where the SCell activation delay for PUCCH SCell needs to be further investigated and with the aim of defining UE requirements.

---

Justification:
- PUCCH SCell activation
  ◦ From release 15 NR, the two PUCCH groups are optionally supported by the UE. However, the PUCCH SCell activation requirement is missing in RAN4 RRM.
Objective:
- PUCCH SCell activation/deactivation [RAN4]
  ◦ Specify SCell Activation Delay Requirement for Deactivated PUCCH SCell (including valid TA and invalid TA)
  ◦ Specify SCell Activation Delay Requirement for Deactivated PUCCH SCell with Multiple SCells (including valid TA and invalid TA)

(continued)

> ∘ Specify SCell Deactivation Delay Requirement for Activated PUCCH SCell
> ∘ Specify SCell Deactivation Delay Requirement for Activated PUCCH SCell with Multiple SCells.

In NR, the two PUCCH groups are optionally supported by the UE to alleviate the PUCCH load on PCell. The SCell which is configured with PUCCH is called PUCCH SCell. In Rel16, the activation delay requirement only concerns the activation of one or multiple downlink SCells. The activation delay requirements for PUCCH SCell in NR is to be defined in Rel17.

In LTE, the activation delay requirement for PUCCH SCell is defined in TS 36.133 section 7.7.6. Comparing with the activation of downlink SCells (i.e. SCells without PUCCH), the UE needs to 'activate uplink' in addition to the DL, when activating the PUCCH SCell to enable CSI reporting (which is used in the activation procedure). In particular, the UE needs to perform random access to get the timing advance (TA) in the PUCCH SCell, if no valid TA is available in the to-be-activated PUCCH SCell.

Therefore, the activation delay requirement for a PUCCH SCell in LTE ($T_{delay\_PUCCH\ SCell}$) is defined by allowing an additional time period for the UE to perform random access procedure (T1+T2) and applying the TA (T3), on top of the SCell activation delay of non-PUCCH SCell ($T_{activate\_basic}$). LTE PUCCH SCell activation delay requirement is defined as:

> If the UE does not have a valid TA for transmitting on an SCell then the UE shall be capable to perform downlink actions related to the SCell activation command as specified in [17] for the SCell being activated on the PUCCH SCell no later than in subframe $n$+$T_{activate\_basic}$ and shall be capable to perform uplink actions related to the SCell activation command as specified in [17] for the SCell being activated on the PUCCH SCell no later than in subframe $n$+$T_{delay\_PUCCH\ SCell}$ and shall transmit valid CSI report for the SCell being activated on the PUCCH SCell no later than in subframe $n$+$T_{delay\_PUCCH\ SCell}$, where:
>
> $$T_{delay\_PUCCH\ SCell} = T_{activate\_basic} + T_1 + T_2 + T_3$$
>
> Where:
> - $T_1$ is the delay uncertainty in acquiring the first available PRACH occasion in the PUCCH SCell. T1 is up to 25 subframes and the actual value of $T_1$ shall depend upon the PRACH configuration used in the PUCCH SCell.
> - $T_2$ is the delay for obtaining a valid TA command for the sTAG to which the SCell configured with PUCCH belongs. $T_2$ is up to 13 subframes.
> - $T_3$ is the delay for applying the received TA for uplink transmission. $T_3$ is 6 subframes.

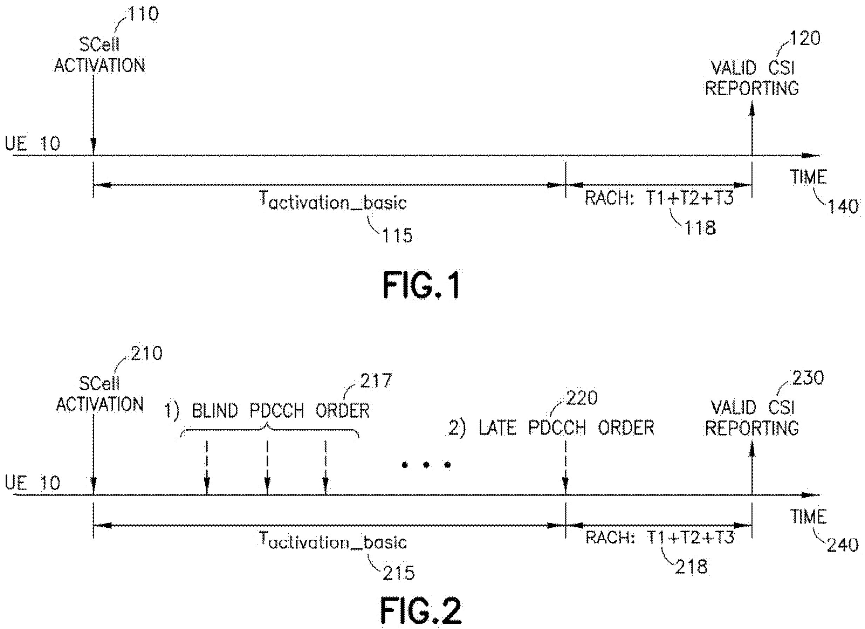

FIG. 1 shows the UE behavior during PUCCH SCell activation procedure in LTE which illustrates how the PUCCH SCell activation delay requirement is derived. As shown in FIG. 1, a UE 10 receives the SCell activation command 110 from the network indicating activation of the PUCCH SCell. The UE shall be able to perform the downlink actions no later than Tactivation_basic 115 which is the activation delay for activating a downlink SCells i.e. non-PUCCH SCell. Afterwards, it initiates the random access procedure to acquire the TA which takes T1+T2+T3 118, and then it can transmit a valid CSI reporting 120 at a time 140. It is noted that in FIG.1, the uplink CSI reporting can be sent on PUCCH SCell only after activation of DL and RACH is completed.

As similarly stated above, as only contention-free RA is supported for SCells, the RA procedure needs to be triggered by a PDCCH order from the network if the UE does not have valid TA for transmitting on the PUCCH SCell. In LTE, the delay requirement is defined assuming the UE has received the PDCCH order on the PUCCH SCell within $T_{activate\_basic}$ (as below). However, since the UL is not aligned, no uplink CSI transmission would be possible on the PUCCH SCell, and the network does not know exactly when the UE has acquired the DL timing and when to transmit the PDCCH order to the UE on the PUCCH SCell.

> With regards to the above delay requirement ($T_{delay\_PUCCH\ SCell}$) shall apply provided that:
> - The UE has received a PDCCH order to initiate RA procedure on the PUCCH SCell within $T_{activate\_basic}$ otherwise additional delay to activate the SCell is expected; and
> - The RA on PUCCH SCell is not interrupted by the RA on PCell otherwise additional delay to activate the SCell is expected; and
> - No SRS carrier based switching occurs during the SCell activation procedure otherwise the PUCCH SCell activation delay ($T_{delay\_PUCCH\ SCell}$) can be extended.

For a non-PUCCH SCell, when CSI for the SCell is reported on PCell PUCCH, early activation is known to the NW by the reception of valid CSI. However, this is not possible for PUCCH SCell when UE does not have valid TA (hence, the UE is not allowed to transmit on the PUCCH SCell). In this case, the network may blindly send PDCCH order repetitively until network receives the preamble from the UE (as in Fig.2-1)). Then it can assign TA to the UE so that the network can receive the valid CSI reporting from the PUCCH SCell. Alternatively, the network has to wait until it knows that the UE is ready to receive in DL (receive the PDCCH Order) which means waiting the maximum allowed DL activation delay (i.e. the SCell activation delay requirement) to ensure the PDCCH order can be received by the UE (as in FIG. 2-2)). This avoids redundant repetitions of PDCCH order, but it is a late PDCCH order which may increase the activation delay.

FIG. 2 shows the possible timings for sending PDCCH order in LTE. As shown in FIG. 2 a UE 10 receives the SCell activation command 110 from the network indicating activation of the PUCCH SCell, and the downlink actions are activated within the activation delay Tactivation_basic 215. In one implementation 217, the network may blindly send PDCCH orders during downlink activation. In another implementation 220, the network may send PDCCH order at the end of downlink activation delay requirement Tactivation_basic 215 to make sure the UE is able to receive the PDCCH order. Upon receiving the PDCCH order, the UE may start the RACH procedure 218 to acquire the TA and then transmit a valid CSI reporting 230 at a time 240.

With this approach, the UEs with better UE implementations or under better conditions would not be able to benefit from shorter DL activation delay and overall reduced PUCCH SCell activation delay. As in practice, the activation delay depends on the configuration of SMTC, SSB, measurement cycle etc., the UE may have acquired the DL timing early before the allowed minimum UE requirements (maximum allowed activation time) for activation delay. In such case the PUCCH SCell could have been activated in faster way.

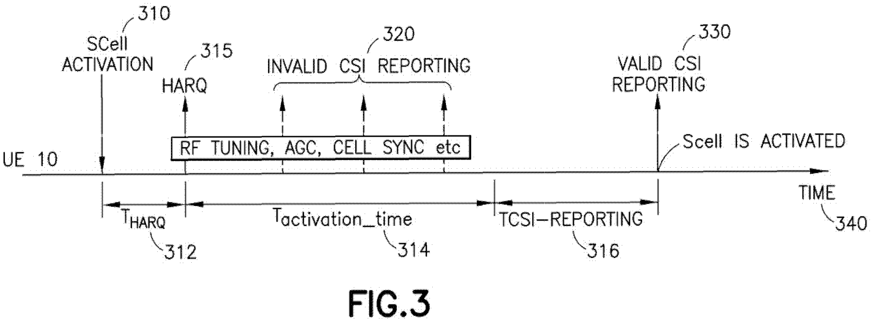

In NR, the single activation delay requirement for the downlink SCell is defined in similar way, except that the SCell activation time ($T_{activaton\_time}$) is separated from the HARQ time ($T_{HARQ}$) and the time for CSI-reporting ($T_{CSI-reporting}$), as shown in FIG. 3. But the problem remains the same.

FIG. 3 shows the timing of the UE behavior during single SCell activation in New Radio which illustrates how the activation delay requirement is derived. As shown in FIG. 3 a UE 10 receives the SCell activation command 310 from the network indicating activation of a downlink SCell. It shall reply the acknowledgement to the HARQ 315 which takes the time of HARQ timing $T_{HARQ}$ 312. Then the SCell shall be activated within the activation delay requirement $T_{activation\_time}$ 314 and the UE can transit a valid CSI reporting 330 after CSI measurements and acquiring the resources for CSI reporting which takes the time of $T_{CSI-reporting}$ 316. The UE may also send invalid CSI reportings 320 during activation of the SCell.

The problem becomes more severe when multiple SCells are being activated together with the PUCCH SCell e.g. when the activation command includes PUCCH SCell and other SCells. According to TS 36.133 section 7.7.7, the activation delay for PUCCH SCell with multiple SCells is defined as below, where $T_{activate\_total}$ is the activation delay for multiple DL SCells which additionally counts for the time due to interruption on cell detection by other SCells being activated. With this extended activation delay requirement, the network may further delay the initiation of PDCCH order (due to UE possibly not receiving the PDCCH Order because of interruptions) till the end of the activation delay requirement for multiple SCells, therefore the activation procedure is unnecessarily prolonged.

If the UE does not have a valid TA for transmitting on an SCell then the UE shall be capable to perform downlink actions related to the SCell activation command as specified in [17] for the SCell being activated on the PUCCH SCell no later than in subframe $n+T_{ativate\_basic}$ and shall be capable to perform uplink actions related to the SCell activation command as specified for the SCell being activated on the PUCCH SCell no later than in subframe $n+T_{delay\_PUCCH\_multiple\_SCells}$ and shall transmit valid CSI report for the SCell being activated on the PUCCH SCell no later than in subframe $n+T_{delay\_PUCCH\_multiple-SCells}$, where:

$$T_{delay\_PUCCH\ multiple\_SCells} = T_{activate\_total} + T_1 + T_2 + T_3$$

$$T_{activate\_total} = T_{activate\_basic} + 5 \times \sum_{i=1}^{N-1} K_i$$

In summary, as the activation of PUCCH SCell includes the RA procedure to acquire the UL TA, when and how to initiate the PDCCH order to trigger the RA procedure will impact the overall activation delay. By optimizing the timing of PDCCH order, the PUCCH SCell can be activated at an earlier time enabling better offloading opportunity.

In accordance with an example embodiment of the invention there are proposed methods to enable the fast activation of PUCCH SCell, when the UE receives a MAC CE including at least the activation of PUCCH SCell.

It is submitted that methods in accordance with example embodiments of the invention at least work to:

　　1) Enable the UE to initiate contention-free access on the PUCCH SCell being activated; and

2) Enable the UE to indicate to the network when it can receive DL on the PUCCH SCell being activated

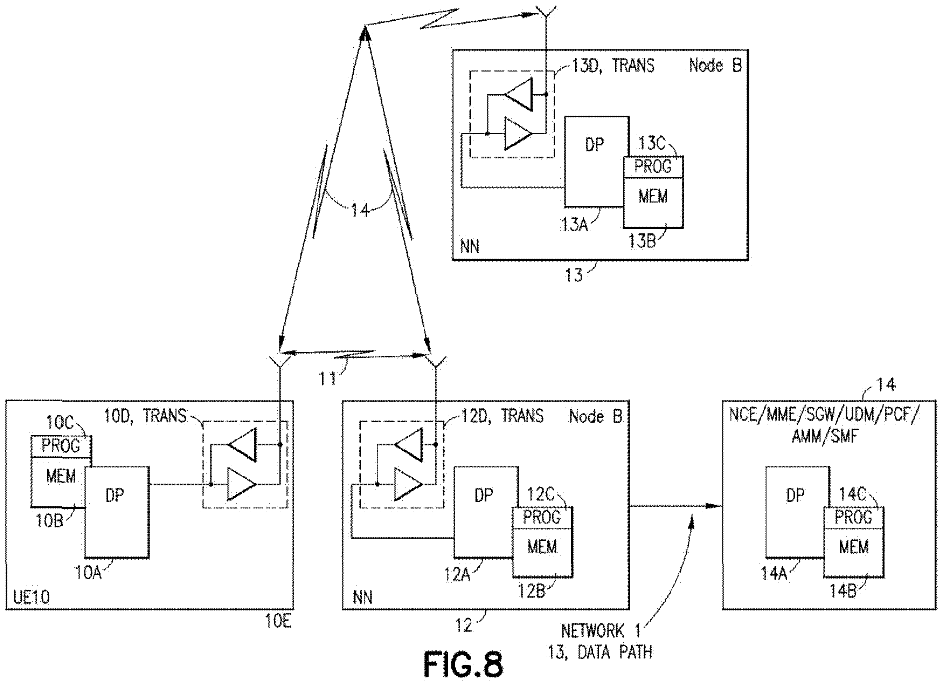

Before describing the example embodiments of the invention in further detail, reference is made to FIG. 8 for illustrating a simplified block diagram of various electronic devices that are suitable for use in practicing the example embodiments of this invention.

FIG. 8 shows a block diagram of one possible and non-limiting exemplary system in which the example embodiments of the invention may be practiced. In FIG. 8, a user equipment (UE) 10 is in wireless communication with a wireless network 1 or network, 1 as in FIG. 8. The wireless network 1 or network 1 as in FIG. 8 can comprise a communication network such as a mobile network e.g., the mobile network 1 or first mobile network as disclosed herein. Any reference herein to a wireless network 1 as in FIG. 8 can be seen as a reference to any wireless network as disclosed herein. Further, the wireless network 1 as in FIG. 8 can also comprises hardwired features as may be required by a communication network. A UE is a wireless, typically mobile device that can access a wireless network. The UE, for example, may be a mobile phone (or called a "cellular" phone) and/or a computer with a mobile terminal function. For example, the UE or mobile terminal may also be a portable, pocket, handheld, computer-embedded or vehicle-mounted mobile device and performs a language signaling and/or data exchange with the RAN.

The UE 10 includes one or more processors DP 10A, one or more memories MEM 10B, and one or more transceivers TRANS 10D interconnected through one or more buses. Each of the one or more transceivers TRANS 10D includes a receiver and a transmitter. Further, each of the transceivers 10D is associated with a Subscriber identity module 10E. The one or more buses may be address, data, or control buses, and may include any interconnection mechanism, such as a series of lines on a motherboard or integrated circuit, fiber optics or other optical communication equipment, and the like. The one or more transceivers TRANS 10D which can be optionally connected to one or more antennas for communication 11 and 18 to NN 12 and NN 13, respectively. The one or more memories MEM 10B include computer program code PROG 10C. The UE 10 communicates with NN 12 and/or NN 13 via a wireless link 11.

The NN 12 (NR/5G Node B, an evolved NB, or LTE device) is a network node such as a master or secondary node base station (e.g., for NR or LTE long term evolution) that communicates with devices such as NN 13 and UE 10 of FIG. 8. The NN 12 provides access to wireless devices such as the UE 10 to the wireless network 1. The NN 12 includes one or more processors DP 12A, one or more memories MEM 12C, and one or more transceivers TRANS 12D interconnected through one or more buses. In accordance with the example embodiments these TRANS 12D can include X2 and/or Xn interfaces for use to perform the example embodiments of the invention. Each of the one or more transceivers TRANS 12D includes a receiver and a transmitter. The one or more transceivers TRANS 12D can be optionally connected to one or more antennas for communication over at least link 11 with the UE 10. The one or more memories MEM 12B and the computer program code PROG 12C are configured to cause, with the one or more processors DP 12A, the NN 12 to perform one or more of the operations as described herein. The NN 12 may communicate with another gNB or eNB, or a device such as the NN 13 such as via link 14. Further, the link 11, link 14 and/or any other link may be wired or wireless or both and may implement, e.g., an X2 or Xn interface. Further the link 11 and/or link 14 may be through other network devices such as, but not limited to an NCE/SGW/AMF/UPF device such as the NCE/MME/SGW/UDM/PCF/AMM/SMF 14 of FIG. 8. The NN 12 may perform functionalities of an MME (Mobility Management Entity) or SGW (Serving Gateway), such as a User Plane Functionality, and/or an Access Management functionality for LTE and similar functionality for 5G.

The NN 13 can be associated with a mobility function device such as an AMF or SMF, further the NN 13 may comprise a NR/5G Node B or possibly an evolved NB a base station such as a master or secondary node base station (e.g., for NR or LTE long term evolution) that communicates with devices such as the NN 12 and/or UE 10 and/or the wireless network 1. The NN 13 includes one or more processors DP 13A, one or more memories MEM 13B, one or more network interfaces, and one or more transceivers TRANS 12D interconnected through one or more buses. In accordance with the example embodiments these network interfaces of NN 13 can include X2 and/or Xn interfaces for use to perform the example embodiments of the invention. Each of the one or more transceivers TRANS 13D includes a receiver and a transmitter that can optionally be connected to one or more antennas. The one or more memories MEM 13B include computer program code PROG 13C. For instance, the one or more memories MEM 13B and the computer program code PROG 13C are configured to cause, with the one or more processors DP 13A, the NN 13 to perform one or more of the operations as described herein. The NN 13 may communicate with another mobility function device and/or eNB such as the NN 12 and the UE 10 or any other device using, e.g., link 11 or another link. The Link 14 as shown in FIG. 8 can be used for communication between the NN12 and the NN13. These links maybe wired or wireless or both and may implement, e.g., an X2 or Xn interface. Further, as stated above the link 11 and/or link 14 may be through other network devices such as, but not limited to an NCE/MME/SGW device such as the NCE/MME/SGW/UDM/PCF/AMM/SMF 14 of FIG. 8.

The one or more buses of the device of FIG. 8 may be address, data, or control buses, and may include any interconnection mechanism, such as a series of lines on a motherboard or integrated circuit, fiber optics or other optical communication equipment, wireless channels, and the like. For example, the one or more transceivers TRANS 12D, TRANS 13D and/or TRANS 10D may be implemented as a remote radio head (RRH), with the other elements of the NN 12 being physically in a different location from the RRH, and the one or more buses 157 could be implemented in part as fiber optic cable to connect the other elements of the NN 12 to a RRH.

It is noted that although FIG. 8 shows a network nodes Such as NN 12 and NN 13. Any of these nodes may can incorporate or be incorporated into an eNodeB or eNB or gNB such as for LTE and NR, and would still be configurable to perform example embodiments of the invention.

Also it is noted that description herein indicates that "cells" perform functions, but it should be clear that the gNB that forms the cell and/or a user equipment and/or mobility management function device that will perform the functions. In addition, the cell makes up part of a gNB, and there can be multiple cells per gNB.

The wireless network 1 or any network it can represent may or may not include a NCE/MME/SGW/UDM/PCF/AMM/SMF 14 that may include (NCE) network control element functionality, MME (Mobility Management Entity)/SGW (Serving Gateway) functionality, and/or serving gateway (SGW), and/or MME (Mobility Management Entity) and/or SGW (Serving Gateway) functionality, and/or user data management functionality (UDM), and/or PCF (Policy Control) functionality, and/or Access and Mobility Management (AMM) functionality, and/or Session Management (SMF) functionality, and/or Authentication Server (AUSF) functionality and which provides connectivity with a further network, such as a telephone network and/or a data communications network (e.g., the Internet), and which is configured to perform any 5G and/or NR operations in addition to or instead of other standards operations at the time of this application. The NCE/MME/SGW/UDM/PCF/AMM/SMF 14 is configurable to perform operations in accordance with example embodiments of the invention in any of an LTE, NR, 5G and/or any standards based communication technologies being performed or discussed at the time of this application. In addition, it is noted that the operations in accordance with example embodiments of the invention, as performed by the NN 12 and/or NN 13, may also be performed at the NCE/MME/SGW/UDM/PCF/AMM/SMF 14.

The NCE/MME/SGW/UDM/PCF/AMM/SMF 14 includes one or more processors DP 14A, one or more memories MEM 14B, and one or more network interfaces (N/W I/F(s)), interconnected through one or more buses coupled with the link 13 and/or 14. In accordance with the example embodiments these network interfaces can include X2 and/or Xn interfaces for use to perform the example embodiments of the invention. The one or more memories MEM 14B include computer program code PROG 14C. The one or more memories MEM14B and the computer program code PROG 14C are configured to, with the one or more processors DP 14A, cause the NCE/MME/SGW/UDM/PCF/AMM/SMF 14 to perform one or more operations which may be needed to support the operations in accordance with the example embodiments of the invention.

The wireless Network 1 may implement network virtualization, which is the process of combining hardware and software network resources and network functionality into a single, software-based administrative entity, a virtual network. Network virtualization involves platform virtualization, often combined with resource virtualization. Network virtualization is categorized as either external, combining many networks, or parts of networks, into a virtual unit, or internal, providing network-like functionality to software containers on a single system. Note that the virtualized entities that result from the network virtualization are still implemented, at some level, using hardware such as processors DP10, DP12A, DP13A, and/or DP14A and memories MEM 10B, MEM 12B, MEM 13B, and/or MEM 14B, and also such virtualized entities create technical effects.

The computer readable memories MEM 12B, MEM 13B, and MEM 14B may be of any type suitable to the local technical environment and may be implemented using any suitable data storage technology, such as semiconductor based memory devices, flash memory, magnetic memory devices and systems, optical memory devices and systems, fixed memory and removable memory. The computer readable memories MEM 12B, MEM 13B, and MEM 14B may be means for performing storage functions. The processors DP10, DP12A, DP13A, and DP14A may be of any type suitable to the local technical environment, and may include one or more of general purpose computers, special purpose computers, microprocessors, digital signal processors (DSPs) and processors based on a multi-core processor architecture, as non-limiting examples. The processors DP10, DP12A, DP13A, and DP14A may be means for performing functions, such as controlling the UE 10, NN 12, NN 13, and other functions as described herein.

<u>Enabling the UE to initiate random access on the PUCCH SCell being activated:</u>

This method in accordance with an example embodiment of the invention enables the UE to initiate PRACH preamble transmission on the PUCCH SCell when the UE has acquired the necessary DL time- and frequency synchronisation from the PUCCH SCell. The preamble to be transmitted on the PUCCH SCell and the PRACH resource used for the preamble transmission could be reserved for the UE in a similar manner as for PDCCH Order (to enable contention free access). In this case the preamble could be delivered to the UE e.g., in or together with the activation command. Alternatively, the UE is indicated to initiate random access procedure on PUCCH SCell. In this case the UE could use normal contention based access and select the preamble according to existing preamble selection rules. This could be done e.g., in the SCell configuration if the SCell is configured as a direct activated SCell.

For the option of initiating RA procedure via PDCCH order:

Options in accordance with example embodiments of the invention for initiating RA procedure via PDCCH order include:

- When cross carrier scheduling is not configured, a minimum requirement is defined for when the latest the UE should be able to receive DL (for receiving PDCCH order) from the PUCCH SCell after receiving the activation command, which could be e.g., the current defined activation delay excluding the time needed for L1-RSRP measurement and reporting. Alternatively, a minimum requirement is defined for when the latest the UE should be able to initiate the PRACH preamble after it has acquired the DL timing e.g., it can be defined as one PRACH resource periodicity; and

- When cross carrier scheduling is configured, PDCCH order could be received from another cell which would already be activated, then based on preamble reception on the PUCCH SCell, the NW knows the PUCCH SCell is activated or at least UL is ready.

**Enable the UE to indicate the network when it can receive DL on the PUCCH SCell being activated:**

In addition, to enable UE and system benefits from better UE implementations, the UE could indicate its readiness to receive/monitor PDCCH on the PUCCH SCell via PCell/PSCell, and such indication is used by the network to transmit the PDCCH order on PUCCH SCell. The indication can be sent e.g., via CSI reporting or MAC CE.

This applies:

- if cross-carrier scheduling is not supported/configured;

- If the network does not receive the indication within the activation delay requirement, it will initiate PDCCH order on PUCCH SCell at the end of the activation delay requirement; and/or

- The UE DL activation delay requirement for PUCCH SCell is determined by the time of sending the indication and/or the time of receiving PDCCH order. For example, the DL activation delay requirement is determined as the time period between HARQ feedback and the time instant of sending the indication.

For both cases, the first CSI reporting on PUCCH SCell starts at completion of the Random Access procedure (e.g., processing time after reception of the RAR which complete the RA - i.e., once the UE has applied the TA provided by the network) if the PUCCH SCell does not have valid TA when the MAC CE is received.

- If the UE has not the valid CSI for the PUCCH SCell e.g. CSI measurement is not completed or CSI reporting resource is not available or the CSI-RS resource is not available for measurement, OoR (Out of Range, i.e. invalid CSI) is reported for the PUCCH SCell.
- If multiple SCells are activated in the SCell activation MAC CE and some of the SCells does not have valid CSI yet, OoR is reported for those SCells.
- Minimum requirement for being able to report valid CSI for the SCells could be same as legacy
- The first CSI reporting (could be invalid or valid) for SCells with PUCCH mapped to a PUCCH SCell is different from the SCells with PUCCH mapped to PCell in that the first CSI reporting does not start at n+K after SCell activation MAC CE reception, but at Random Access (RA) completion, and OoR is allowed to be reported only between the period between RA completion (if happens before the minimum requirement) and the minimum requirement for valid CSI reporting.

When multiple SCells including the PUCCH SCell are being activated, it is proposed PUCCH SCell is activated (on DL) prior to other SCells being activated so that random access procedure can start at the earliest time. Alternatively, the PUCCH SCell is activated (on DL) prior to other SCells being activated whose UL are associated to the PUCCH SCell. With this principle, the activation delay for PUCCH SCell with multiple SCells are minimized.

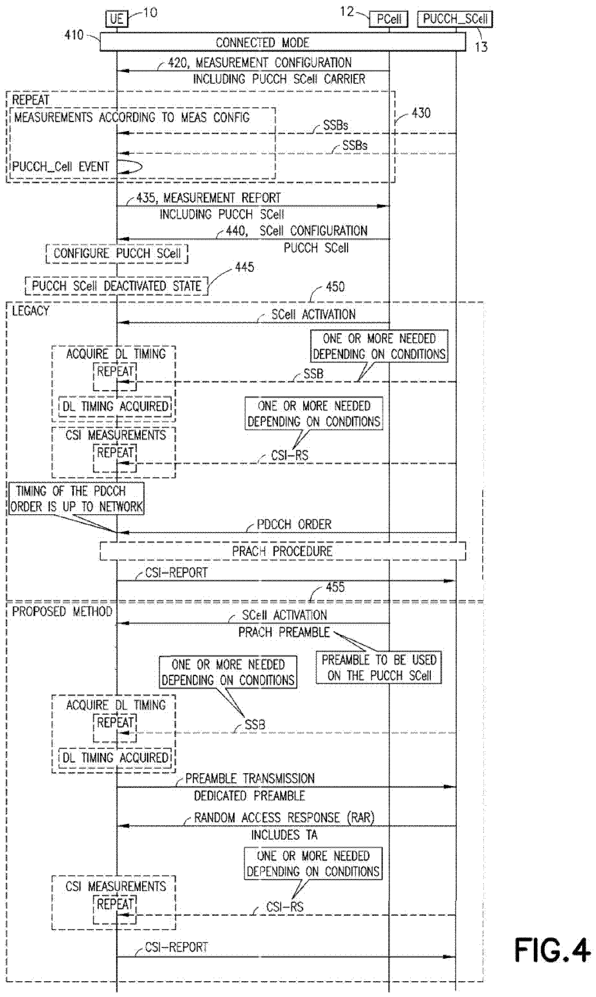

Flow chart for the 'Enable the UE to initiate contention-free access on the to-be activated PUCCH SCell' solution (proposed method 1)) is illustrated next in FIG.4:

In the legacy method, when to send PDCCH order depends on implementation. To save system capacity, the network may send PDCCH order by the end of $T_{activation\_time}$, or has to repeat the PDCCH order blindly. With the minimum requirement defined for receiving DL as proposed which is earlier than the legacy requirement, thus the NW knows the UE is ready to receive PDCCH order earlier than by the end of $T_{activation\_time}$

Beside, in the proposed method, the network can send the PDCCH order e.g., the RA preamble and/or PRACH resources via PCell together with the SCell activation MAC CE or in the SCell configuration if the PUCCH SCell is directly activated during the configuration. The UE would then use this preamble for contention-free RACH when DL timing is acquired. The first CSI reporting shall be sent no earlier than the completion of RA procedure. Benefit from new is especially in FR2. We get UE to indicate in the UL the used DL (assuming UL/DL correspondence).

FIG. 4 shows how to trigger the PDCCH order for PUCCH SCell using legacy operations and using operations in accordance with an example embodiment of the invention. As shown in FIG. 4 a UE 10 is in a connected mode 410 with a PCell 12 and a PUCCH_SCell 13. As shown in step 420 of FIG. 4 a measurement configuration including PUCCH SCell carrier 420 is communicated between the PCell 12 and the UE 10. As shown in step 430 of FIG. 4 measurements according to measurement configurations using SSBs and a PUCCH_cell event is performed. As shown in step 435 of FIG. 4 a measurement Report including the measurement results of PUCCH SCell is communicated between the UE 10 and the PCell 12. In step 440 of FIG. 4 an SCell configuration for the PUCCH SCell is communicated between the UE 10 and the PCell 12. As shown in steps of step 445 of FIG. 4 the UE 10 is applying the configuration of PUCCH SCell that is in a deactivated state. In steps 450 of FIG. 4 there is shown legacy operations based on SCell activation. In steps 455 there is shown a proposed method in accordance with an example embodiment of the invention.

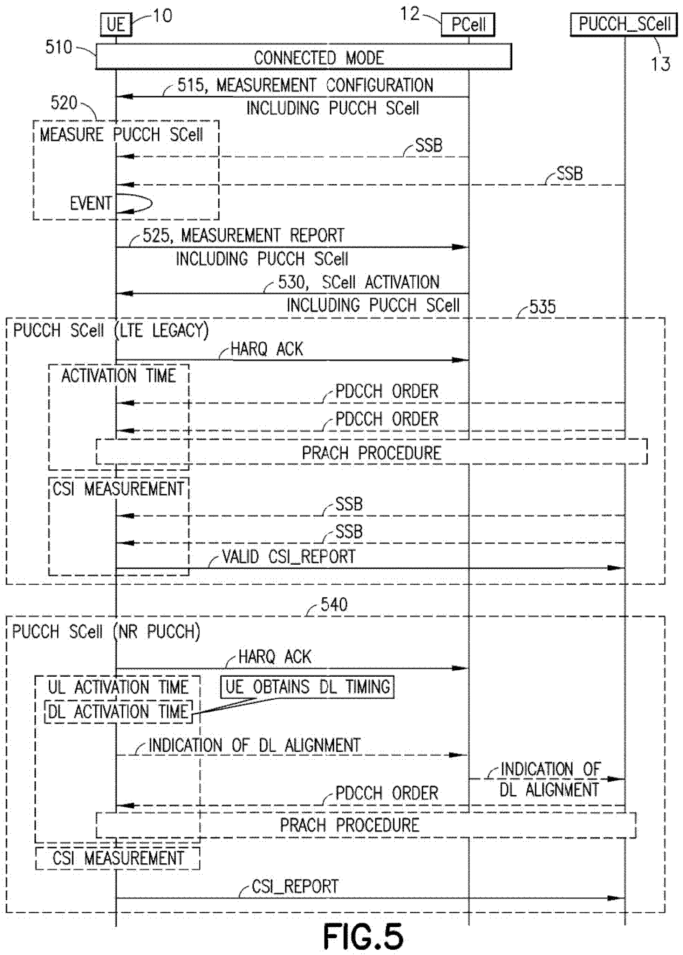

The flow chart of how to trigger the PDCCH order in the proposed solution (Enable the UE to indicate the network when it can receive DL on the to-be activated PUCCH SCell) i.e. proposed method 2) is illustrated in FIG. 5. As shown in step 515 to step 525 of FIG. 5 measurements according to measurement configurations using SSBs from the PCell 12 and the PUCCH SCell 13 is performed.

FIG. 5 shows a method of how to trigger the PDCCH order for PUCCH SCell in accordance with an example embodiment of the invention. As shown in FIG. 5 a UE 10 is in a connected mode 510 with a PCell 12. As shown in step 515 of FIG. 5 there is communicated between the PCell 12 and the UE 10 a Measurement configuration including the configuration of the PUCCH SCell. As shown in step 525 of FIG. 5 a measurement Report including the measurement results on PUCCH SCell is communicated between the UE 10 and the PCell 12 upon triggering of an event as defined in measurement configuration in step 515. In step 530 of FIG. 5 a PUCCH SCell activation command is communicated between the PCell 12 and the UE 10. In steps 535 of FIG. 5 there is shown LTE legacy operations based on PUCCH SCell activation. In steps 540 of FIG. 5, there is shown a proposed PUCCH SCell (NR PUCCH) method in accordance with an example embodiment of the invention.

In this solution, if a UE with good implementation activates the DL of PUCCH SCell earlier than the activation delay requirement, the UE may send the indication of DL alignment to the network and network would then initiate the PDCCH order. This informs the network clear information of DL alignment hence avoids unnecessary blind PDCCH order scheduling.

NOTE that activation MAC CE can be sent via other already activated cells with PUCCH mapped to PCell and the ACK can be sent on PUCCH of PCell, thus is not impacted.

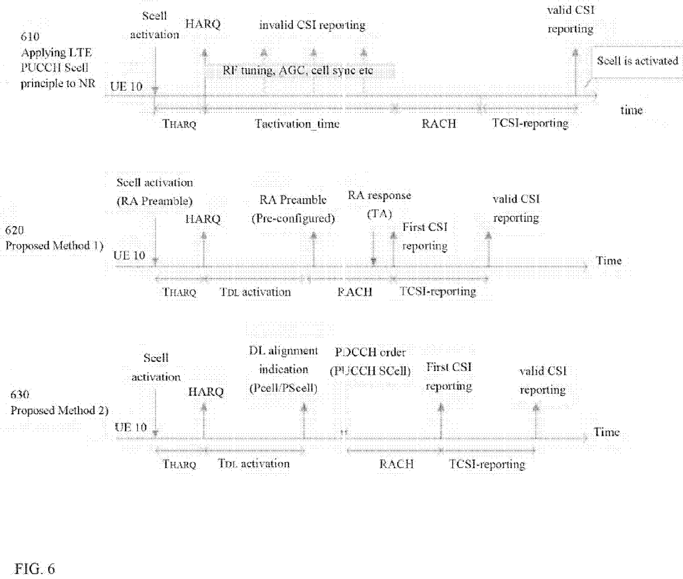

In addition, Figure 6 shows the signalling timing at UE side for the legacy and proposed methods:

- The first timeline assumes the principle of LTE PUCCH SCell activation is applied to NR. The UE shall start random access procedure after it has acquired the DL timing and completed DL activation.
- In the second timeline, the dedicated preamble/PRACH resource to be used for RACH in PUCCH SCell is configured/sent to the UE via PCell. The network need reserve the preamble/resources until the RACH procedure is completed. But the SCell can be activated the fastest.
- In the third timeline, the UE indicates the DL alignment to network which triggers the PDCCH order. The overhead is minimized although at the cost of round-trip time for the indication.

FIG. 6 shows a comparison of PUCCH SCell activation timing between legacy and proposed methods in accordance with an example embodiment of the invention. As shown in step sequence 610 of FIG. 6 there is applying LTE PUCCH SCell activation principles to NR. In step sequence 610 there is communication over time with a UE 10 based on a THarq, Tactivation_time, RACH, and TCSI-reporting for SCell activation. When the UE receives the activation command to activate the PUCCH SCell, it will send the HARQ acknowledgment following the HARQ timing. The invalid CSI reporting may be transmitted while the UE is activating the downlink actions in PUCCH SCell e.g. RF tuning, AGC and cell sync, etc. Only after the downlink actions are activated, the UE would then perform RACH and then transit a valid CSI reporting. In step sequence of proposed method 1) 620 of FIG. 6 there is communication over time with the UE 10 based on THarq, TDLactivation_time, RACH, and TCSI-reporting wherein the communicating includes SCell activation (RA Preamble), HARQ, RA Preamble transmission (pre-configured), RA Response (TA), First CSI reporting, and valid CSI reporting. In step sequence of proposed method 2) 630 of FIG. 6 there is communication over time with the UE 10 based on THarq, TDLactivation_time, RACH, and TCSI-reporting wherein the communicating includes SCell activation, HARQ, DL alignment indication (PCell/PSCell), PUCCH order (PUCCH SCell), First CSI reporting, and valid CSI reporting. In this method, the preamble and the PRACH resources are reserved and delivered from the network to the UE together with the SCell activation command. The UE will transmit the preamble after it has activated the downlink actions. The network would then know the DL of the PUCCH SCell has been activated and hence reply the RA response indicating the UL TA. With the UL TA, the UE can transmit the first CSI reporting at the resources for CSI reporting. The CSI reporting could be invalid e.g. with OoR value before the UE has measured a valid CSI. And eventually the valid CSI reporting can be transmitted implying the completion of the activation of PUCCH SCell.

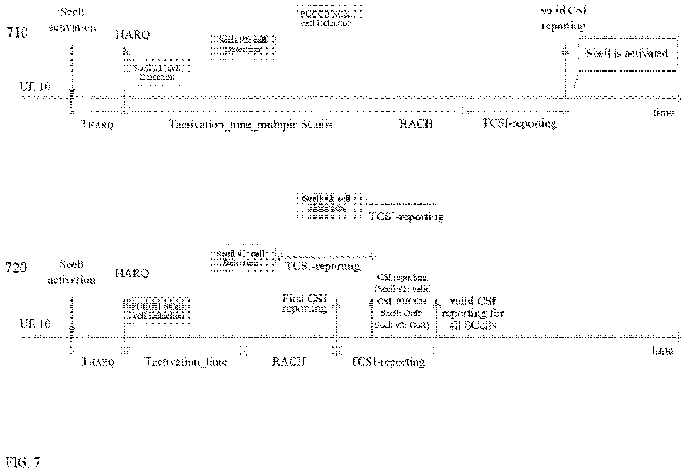

Figure 7 shows the timing of activation in respective SCells when multiple SCells including the PUCCH SCell are being activated in accordance with an example embodiment of the invention. As shown in step sequence 710 of FIG. 7 for an SCell activation. In step sequence 710 of FIG. 7 there is communication over time with the UE 10 based on THarq, TActivation_time_multiple SCells, RACH, TCSI-reporting for an activated SCell. Step sequence 710 of FIG. 7 shows SCell activation, HARQ followed by SCell 1: cell detection, SCell 2: cell detection, and PUCCH SCell detection and including valid CSI reporting for the activated SCell. In step sequence 720 of FIG. 7 there is communication over time with the UE 10 based on THarq, TActivation_time, RACH, and TCSI-reporting for an activated SCell. The step sequence 720 of FIG. 7 shows SCell activation, HARQ based on PUCCH SCell detection, followed by SCell 1: cell detection and SCell 2: cell detection using TCSI-reporting, first CSI reporting, CSI reporting (SCell 1: valid CSI; PUCCH SCell; OoR; SCell2 OoR), and valid CSI reporting for all SCells.

The upper timeline indicates the activation process when three SCells including PUCCH SCell are being activated. And the two SCells SCell1 and SCell2 are assumed to be associated to the PUCCH SCell i.e. their PUCCH are mapped to the PUCCH SCell. According to LTE principle, the activation delay requirement for multiple downlink SCells activation uses $T_{activation\_time-multiple\ SCells}$. According to 38.133 section 8.3.7, $T_{activation\_time\_multiple\ SCells}$ takes into account the possible interruptions on AGC settling and cell detection. In the worst case, the detection of PUCCH SCell may be interrupted by activation of other SCells hence its DL may be activated after DL activations are completed for all other SCells. The RACH procedure will start only after the PUCCH SCell is detected in downlink.

Since the SCells are associated to the PUCCH SCell, the valid CSI reporting for these SCells can be sent only after RACH is completed. Therefore, in the proposed timeline, PUCCH SCell DL activation is prioritized over other SCells so that RACH procedure can start at the earliest time. Meanwhile, the UE can perform cell detection on other SCells during random access. And the first CSI reporting can be sent no earlier than the completion of RACH. After the RACH completion, the UE will measure and report CSI in parallel in respective SCells and send the CSI for respective SCells on the CSI resources.

Based on the principle, the SCell activation delay for PUCCH SCell with multiple SCells can be defined as below (this can be added to TS 38.133):

- If the other SCells being activated are associated to the PUCCH SCell,

  ○ For PUCCH SCell, the UE shall be able to report valid CSI no later than in slot
  $$\frac{T_{HARQ} + T_{activation\_time} + T_{RACH} + T_{CSI\_Reporting}}{NR\ slot\ length}$$

  ○ For non-PUCCH SCell, the UE shall be able to report valid CSI no later than in slot max (
  $$\frac{T_{HARQ} + T_{activation\_time} + T_{RACH} + T_{CSI\_Reporting}}{NR\ slot\ length},$$
  $$\frac{T_{HARQ} + T_{activation\_time\_multiplescells} + T_{CSI\_Reporting}}{NR\ slot\ length}),$$

- If the other SCell being activated is associated to PCell PUCCH,

  ○ For PUCCH SCell, the UE shall be able to report valid CSI no later than in slot
  $$\frac{T_{HARQ} + T_{activation\_time\_multiple\ scells} + T_{RACH} + T_{CSI\_Reporting}}{NR\ slot\ length}$$

  ○ For non-PUCCH SCell, the UE shall be able to report valid CSI no later than in slot
  $$\frac{T_{HARQ} + T_{activation\_time\_multiple\ scells} + T_{CSI\_Reporting}}{NR\ slot\ length}$$

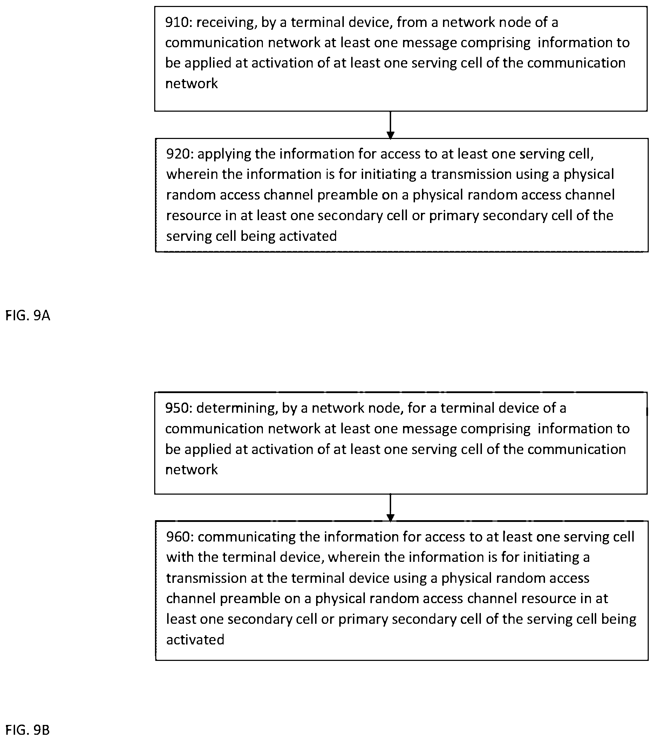

FIG. 9A illustrates operations which may be performed by a device such as, but not limited to, a device (e.g., the UE 10 as in FIG. 8). As shown in step 910 of FIG. 9A there is receiving, by a terminal device, from a network node of a communication network at least one message comprising information to be applied at activation of at least one serving cell of the communication network. Then as shown in step 920 of FIG. 9A there is applying the information for access to at least one serving cell, wherein the information is for initiating a transmission using a physical random access channel preamble on a physical random access channel resource in at least one secondary cell or primary secondary cell of the at least one serving cell being activated.

In accordance with example embodiments as described in the paragraph above, wherein the at least one serving cell comprises a secondary cell or a primary secondary cell.

In accordance with example embodiments as described in the paragraph above, wherein the at least one message comprises an RRC message, a medium access control element or a PDCCH order.

In accordance with example embodiments as described in the paragraph above, wherein the initiating the transmission is for contention-free random access channel access based on the terminal device acquiring necessary downlink time and frequency synchronisation from the at least one serving cell during the activation.

In accordance with example embodiments as described in the paragraph above, wherein initiating the transmission using a physical random access channel preamble on a physical random access channel resource in response to the terminal device acquiring necessary downlink time and frequency synchronisation from the at least one serving cell is no longer than a minimum time requirement.

In accordance with example embodiments as described in the paragraph above, wherein the at least one of the physical random access channel preamble or physical random access channel preamble resource is reserved for the terminal device by the communication network to enable contention-free access to the at least one serving cell at the time the at least one serving cell is activated.

In accordance with example embodiments as described in the paragraph above, wherein the at least one serving cell comprises a physical uplink control channel secondary cell, and wherein the transmission using the physical random access channel preamble is transmitted on the physical uplink control channel secondary cell.

In accordance with example embodiments as described in the paragraph above, wherein the terminal device communicates an indication to the communication network to one of receive or monitor physical downlink control channel order on the physical uplink control channel secondary cell via a primary (secondary) cell or another serving cell of the communication network.

In accordance with example embodiments as described in the paragraph above, wherein the terminal device communicates an indication to the communication network in response to the terminal device acquiring necessary downlink time and frequency synchronisation from the at least one serving cell.

In accordance with example embodiments as described in the paragraph above, wherein the terminal device communicates the indication to the communication network or receives the physical downlink control channel order from the at least one secondary cell in response to the terminal device acquiring necessary downlink time and frequency synchronisation from the at least one serving cell no longer than a minimum time requirement.

In accordance with example embodiments as described in the paragraph above, wherein the applying comprises reporting channel state information upon random access completion for an activated serving cell of the at least one serving cell with a physical uplink control channel mapped to the physical uplink control channel secondary cell.

In accordance with example embodiments as described in the paragraph above, wherein OoR is allowed between the random access completion and minimum time requirement for valid CSI reporting and valid CSI is reported after the minimum time requirement.

In accordance with example embodiments as described in the paragraph above, wherein a downlink activation delay requirement is determined based on one of a time the indication is communicated to the communication network or a time the physical downlink control channel order is received from the communication network.

In accordance with example embodiments as described in the paragraph above, wherein the indication to the communication network is to initiate a physical downlink control channel order via the physical downlink control channel in the at least one serving cell for initiating a random access procedure from the terminal device.

In accordance with example embodiments as described in the paragraph above, wherein for a case that cross carrier scheduling is configured at the terminal device, the physical downlink control channel order is received in information from another cell of the communication network.

In accordance with example embodiments as described in the paragraph above, wherein the indication is using a medium access control element.

In accordance with example embodiments as described in the paragraph above, wherein a downlink activation delay requirement is determined based on one of a time the indication is communicated to the communication network or a time the physical downlink control channel order is received from the communication network.

In accordance with example embodiments as described in the paragraph above, there is based on the indication from the terminal device sent via one of channel state information reporting resource or a medium access control element to the network node to receive a physical downlink control channel order, receiving from the network node information comprising the physical downlink control channel order; and based on the information, performing a random access procedure for random access to at least one serving cell.

In accordance with example embodiments as described in the paragraph above, wherein the random access procedure is used to acquire a timing advance for the access, wherein the timing advance is used to transmit channel state information reporting.

In accordance with example embodiments as described in the paragraph above, there is based on the random access, reporting one of valid channel state information or invalid channel state information to the at least one secondary cell.

In accordance with example embodiments as described in the paragraph above, wherein the reporting is performed upon random access completion for the activation of the at least one secondary cell or primary secondary cell of the serving cell, wherein the activation of the at least one serving cell is with physical uplink control channel mapped to a physical uplink control channel secondary cell.

In accordance with example embodiments as described in the paragraph above, wherein for a case that more than one secondary cell of the at least one serving cell are activated, reporting invalid channel state information is based on channel state information being at least one of not available or not completed for at least one of the more than one secondary cell.

In accordance with example embodiments as described in the paragraph above, wherein the physical uplink control channel secondary cell is activated prior to other secondary cells when multiple secondary cells are being activated in an activation command for the activation of the at least one serving cell.

In accordance with example embodiments as described in the paragraph above, wherein the other secondary cells are associated with the physical uplink control channel secondary cell.

In accordance with example embodiments as described in the paragraph above, wherein an invalid channel state information is allowed between random access completion and the first valid channel state information reporting and the first valid channel state information is reported after the minimum time requirement in response to the random access completion.

A non-transitory computer-readable medium (MEM 10B as in FIG. 8) storing program code (PROG 10C as in FIG. 8), the program code executed by at least one processor (DP 10A as in FIG. 8) to perform the operations as at least described in the paragraphs above.

In accordance with an example embodiment of the invention as described above there is an apparatus comprising: means for receiving (one or more transceivers TRANS 10D, MEM 10B, PROG 10C, and DP 10A as in FIG. 8), by a terminal device (UE 10 as in FIG. 8), from a network node (NN 12 and/or NN 13 as in FIG. 8) of a communication network (Network 1 as in FIG. 8) at least one message comprising information to be applied at activation of at least one serving cell of the communication network; and means for applying (one or more transceivers TRANS 10D, MEM 10B, PROG 10C, and DP 10A as in FIG. 8), the information for access to at least one serving cell, wherein the information is for initiating a transmission using a physical random access channel preamble on a physical random access channel resource in at least one secondary cell or primary secondary cell of the at least one serving cell being activated.

In the example aspect of the invention according to the paragraph above, wherein at least the means for receiving and applying comprises a non-transitory computer readable medium [MEM 10B as in FIG. 8] encoded with a computer program [PROG 10C as in FIG. 8] executable by at least one processor [DP 10A as in FIG. 8].

FIG. 9B illustrates operations which may be performed by a device such as, but not limited to, a device (e.g., the NN 12 and/or NN 13 as in FIG. 8). As shown in step 950 of FIG. 9B there is determining, by a network node, for a terminal device of a communication network at least one message comprising information to be applied at activation of at least one serving cell of the communication network. Then as shown in step 960 of FIG. 9B there is communicating the information for access to at least one serving cell with the terminal device, wherein the information is for initiating a transmission at the terminal device using a physical random access channel preamble on a physical random access channel resource in at least one secondary cell or primary secondary cell of the at least one serving cell being activated.

In accordance with the example embodiments as described in the paragraph above, wherein the at least one serving cell comprises a secondary cell or a primary secondary cell.

In accordance with the example embodiments as described in the paragraphs above, wherein the at least one message comprises an RRC message, a medium access control element or a PDCCH order.

In accordance with the example embodiments as described in the paragraphs above, wherein the at least one of the physical random access channel preamble or physical random access channel preamble resource is for application by the terminal device for the physical random access channel preamble transmission no later than a minimum time requirement.

In accordance with the example embodiments as described in the paragraphs above, wherein the initiating the transmission is for contention-free random access channel access based on the terminal device acquiring necessary downlink time and frequency synchronisation from the at least one serving cell during the activation.

In accordance with example embodiments as described in the paragraphs above, wherein initiating the transmission using a physical random access channel preamble on a physical random access channel resource in response to the terminal device acquiring necessary downlink time and frequency synchronisation from the at least one serving cell is no longer than a minimum time requirement.

In accordance with the example embodiments as described in the paragraphs above, wherein the at least one of the physical random access channel preamble or physical random access channel preamble resource is reserved for the terminal device by the communication network to enable contention-free access to the at least one serving cell at the time the at least one serving cell is activated.

In accordance with the example embodiments as described in the paragraphs above, wherein the at least one secondary cell comprises a physical uplink control channel secondary cell, and wherein the transmission using the physical random access channel preamble on a physical random access channel preamble resource is for transmitting on the physical uplink control channel secondary cell.

In accordance with the example embodiments as described in the paragraphs above, wherein the network node receives an indication to one of receive or monitor physical downlink control channel order on the physical uplink control channel secondary cell via a primary (secondary) cell or another serving cell of the communication network.

In accordance with the example embodiments as described in the paragraphs above, wherein the terminal device communicates an indication to the communication network in response to the terminal device acquiring necessary downlink time and frequency synchronisation from the at least one serving cell.

In accordance with the example embodiments as described in the paragraphs above, wherein the terminal device communicates the indication to the communication network or receives the physical downlink control channel order from the at least one secondary cell in response to the terminal device acquiring necessary downlink time and frequency synchronisation from the at least one serving cell no longer than a minimum time requirement.

In accordance with the example embodiments as described in the paragraphs above, wherein a minimum time requirement is defined for communication the physical downlink control channel order from the at least one secondary cell.

In accordance with the example embodiments as described in the paragraphs above, wherein the information comprises a delay time following acquisition by the terminal device of at least one of downlink timing to initiate the at least one of the physical random access channel preamble or physical random access channel resource.

In accordance with the example embodiments as described in the paragraphs above, wherein the an indication to the communication network to provide a physical downlink control channel order via the physical downlink control channel in the at least one serving cell for use by the terminal device to initiate a random access procedure.

In accordance with the example embodiments as described in the paragraphs above, wherein for a case that cross carrier scheduling is configured at the terminal device, the physical downlink control channel order is received in information from another cell of the communication network.

In accordance with the example embodiments as described in the paragraphs above, wherein the information from the another cell indicates to the terminal device at least one of that the another cell is activated or an availability of an uplink to a secondary cell of the at least one secondary cell.

In accordance with the example embodiments as described in the paragraphs above, wherein the indication is using a medium access control element.

In accordance with the example embodiments as described in the paragraphs above, wherein a downlink activation delay requirement is determined based on one of a time a medium access control element is received in the at least one message during the minimum time requirement or a time the physical downlink control channel order is received from the communication network.

In accordance with the example embodiments as described in the paragraphs above, there is based on the indication from the terminal device sent via one of channel state information reporting resource or a medium access control element to the network node to receive a physical downlink control channel order, receiving from the network node information comprising the physical downlink control channel order; and based on the information, performing a random access procedure for random access to at least one serving cell.

In accordance with the example embodiments as described in the paragraphs above, wherein the random access procedure is used to acquire a timing advance for the access, wherein the timing advance is used to transmit channel state information reporting.

In accordance with the example embodiments as described in the paragraphs above, there is based on the random access, reporting one of channel state information or invalid channel state information to the at least one secondary cell.

In accordance with the example embodiments as described in the paragraphs above, wherein for a case that more than one secondary cell of the at least one secondary cell is activated, reporting invalid channel state information is based on channel state information being at least one of not available or not completed for at least one of the more than one secondary cell.

In accordance with the example embodiments as described in the paragraphs above, wherein the physical uplink control channel secondary cell is activated prior to other secondary cells when multiple secondary cells are being activated in an activation command for the activation of the at least one serving cell .

In accordance with the example embodiments as described in the paragraphs above, wherein the other secondary cells are associated with the physical uplink control channel secondary cell.

A non-transitory computer-readable medium (MEM 12B and/or MEM 13B as in FIG. 8) storing program code (PROG 12C and/or PROG 13C as in FIG. 8), the program code executed by at least one processor (DP 12A and/or DP 13A as in FIG. 8) to perform the operations as at least described in the paragraphs above.

In accordance with an example embodiment of the invention as described above there is an apparatus comprising: means for determining (one or more transceivers TRANS 12D and/or TRANS 13D, MEM 12B and/or MEM 13B, PROG 12C and/or PROG 13C, and DP 12A and/or DP 13A as in FIG. 8), by a network node NN 12 and/or NN 13 as in FIG. 8), for a terminal device (UE 10 as in FIG. 8) of a communication network (Network 1 as in FIG. 8) at least one message comprising information to be applied at activation of at least one serving cell of the communication network. Then means for communicating (one or more transceivers TRANS 12D and/or TRANS 13D, MEM 12B and/or MEM 13B, PROG 12C and/or PROG 13C, and DP 12A and/or DP 13A as in FIG. 8) the information for access to at least one serving cell with the terminal device, wherein the information is for initiating (one or more transceivers TRANS 12D and/or TRANS 13D, MEM 12B and/or MEM 13B, PROG 12C and/or PROG 13C, and DP 12A and/or DP 13A as in FIG. 8) a transmission at the terminal device using at least one of a physical random access channel preamble on a physical random access channel resource in at least one secondary cell or primary secondary cell of the at least one serving cell being activated.

In the example aspect of the invention according to the paragraph above, wherein at least the means for determining and communicating comprises a non-transitory computer readable medium [MEM 12B and/or MEM 13B as in FIG. 8] encoded with a computer program [PROG 12C and/or PROG 13C as in FIG. 8] executable by at least one processor [DP 12A and/or DP 13A as in FIG. 8].

Further, in accordance with example embodiments of the invention there is circuitry for performing operations in accordance with example embodiments of the invention as disclosed herein. This circuitry can include any type of circuitry including content coding circuitry, content decoding circuitry, processing circuitry, image generation circuitry, data analysis circuitry, etc.). Further, this circuitry can include discrete circuitry, application-specific integrated circuitry (ASIC), and/or field-programmable gate array circuitry (FPGA), etc. as well as a processor specifically configured by software to perform the respective function, or dual-core processors with software and corresponding digital signal processors, etc.). Additionally, there are provided necessary inputs to and outputs from the circuitry, the function performed by the circuitry and the interconnection (perhaps via the inputs and outputs) of the circuitry with other components that may include other circuitry in order to perform example embodiments of the invention as described herein.

In accordance with example embodiments of the invention as disclosed in this application this application, the "circuitry" provided can include at least one or more or all of the following:

(a) hardware-only circuit implementations (such as implementations in only analog and/or digital circuitry);

(b) combinations of hardware circuits and software, such as (as applicable):

(i) a combination of analog and/or digital hardware circuit(s) with software/firmware; and

(ii) any portions of hardware processor(s) with software (including digital signal processor(s)), software, and memory(ies) that work together to cause an apparatus, such as a mobile phone or server, to perform various functions, such as functions or operations in accordance with example embodiments of the invention as disclosed herein); and

(c) hardware circuit(s) and or processor(s), such as a microprocessor(s) or a portion of a microprocessor(s) that requires software (e.g., firmware) for operation, but the software may not be present when it is not needed for operation."

In accordance with example embodiments of the invention, there is adequate circuitry for performing at least novel operations as disclosed in this application, this 'circuitry' as may be used herein refers to at least the following:

(a) hardware-only circuit implementations (such as implementations in only analog and/or digital circuitry); and

(b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions); and

(c) to circuits, such as a microprocessor(s) or a portion of a microprocessor(s), that require software or firmware for operation, even if the software or firmware is not physically present.

This definition of 'circuitry' applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile phone or a similar integrated circuit in a server, a cellular network device, or other network device.

In general, the various embodiments may be implemented in hardware or special purpose circuits, software, logic or any combination thereof. For example, some aspects may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The word "exemplary" as may be used herein is to mean "serving as an example, instance, or illustration." Any embodiment described herein as "exemplary" is not necessarily to be construed as preferred or advantageous over other embodiments. All of the embodiments described in this Detailed Description are exemplary embodiments provided to enable persons skilled in the art to make or use the invention and not to limit the scope of the invention which is defined by the claims.

The foregoing description has provided by way of exemplary and non-limiting examples a full and informative description of the best method and apparatus presently contemplated by the inventors for carrying out the invention.

It should be noted that the terms "connected," "coupled," or any variant thereof, mean any connection or coupling, either direct or indirect, between two or more elements, and may encompass the presence of one or more intermediate elements between two elements that are "connected" or "coupled" together. The coupling or connection between the elements can be physical, logical, or a combination thereof. As employed herein two elements may be considered to be "connected" or "coupled" together by the use of one or more wires, cables and/or printed electrical connections, as well as by the use of electromagnetic energy, such as electromagnetic energy having wavelengths in the radio frequency region, the microwave region and the optical (both visible and invisible) region, as several non-limiting and non-exhaustive examples.

Furthermore, some of the features of the preferred embodiments of this invention could be used to advantage without the corresponding use of other features. As such, the foregoing description should be considered as merely illustrative of the principles of the invention, and not in limitation thereof.

**Claims**

1. A method, comprising:

    transmitting, by a terminal device (10), an indication to a network node of a communication network to receive or monitor a physical downlink control channel, PDCCH, order on a physical uplink control channel secondary cell via a primary secondary cell (13) or another serving cell of the network node(14);
    in response to transmitting the indication, receiving, by the terminal device (10), from the network node (14) of the communication network at least one message comprising information to be applied at activation of at least one serving cell of the communication network, wherein the at least one message comprises the PDCCH order; and
    applying the information for access to at least one serving cell, wherein the information is for initiating a transmission using a physical random access channel preamble on a physical random access channel resource in at least one serving cell being activated, wherein the at least one serving cell being activated is of type secondary cell or of type primary secondary cell (13).

2. An apparatus (10), comprising:

    means for transmitting an indication to a network node (14) of a communication network to receive or monitor a physical downlink control channel, PDCCH, order on a physical uplink control channel secondary cell via a primary secondary cell (13) or another serving cell of the network node;

means for, in response to the indication, receiving from the network node (14) of the communication network at least one message comprising information to be applied at activation of at least one serving cell of the communication network, wherein the at least one message comprises the PDCCH order; and

means for applying the information for access to the at least one serving cell, wherein the information is for initiating a transmission using a physical random access channel preamble on a physical random access channel resource in at least one serving cell being activated, wherein the at least one serving cell being activated is of type secondary cell or of type primary secondary cell (13).

3. The apparatus (10) of claim 2, wherein the at least one serving cell comprises a primary cell (12) or a primary secondary cell (13).

4. The apparatus (10) of any one of claims 2-3, wherein the initiating the transmission is for contention-free random access channel access based on the apparatus acquiring necessary downlink time and frequency synchronisation from the at least one serving cell during the activation.

5. The apparatus (10) of any one of claims 2-4, wherein the physical random access channel preamble on the physical random access channel resource is reserved for the apparatus (10) by the communication network to enable contention-free access to the at least one serving cell at the time the at least one serving cell is activated.

6. The apparatus (10) of any one of claims 2-5, wherein the at least one secondary cell (13) comprises a physical uplink control channel secondary cell (13), and wherein the transmission using the physical random access channel preamble on the physical random access channel resource is transmitted on the physical uplink control channel secondary cell (13).

7. The apparatus (10) of any one of claims 2-6, wherein the indication to the communication network is an indication to provide the physical downlink control channel order via the physical downlink control channel in the at least one serving cell for use by the apparatus to initiate a random access procedure.

8. The apparatus (10) of any one of claims 2-7, further comprising:

means for, based on the indication transmitted via one of channel state information reporting resource or a medium access control element to the network node (14) to receive the physical downlink control channel order, receiving from the network node (14) information comprising the physical downlink control channel order; and

means for, based on the information, performing a random access procedure for random access to at least one serving cell.

9. The apparatus (10) of claim 8, further comprising:
means for, based on the random access, reporting channel state information or invalid channel state information to the at least one secondary cell (13).

10. The apparatus (10) of claim 9, wherein the reporting is performed upon random access completion for the activation of the at least one secondary cell or primary secondary cell (13) of the serving cell, wherein the activation of the at least one serving cell is with physical uplink control channel mapped to a physical uplink control channel secondary cell.

11. A method, comprising:

receiving, by a network node (14) of a communication network, an indication from a terminal device (10) to receive or monitor a physical downlink control channel, PDCCH, order on a physical uplink control channel secondary cell via a primary secondary cell (13) or another serving cell of the communication network;

determining, by the network node (14), for the terminal device (10) at least one message comprising information to be applied at activation of at least one serving cell of the communication network, wherein the at least one message comprises the PDCCH order; and

based on the indication, transmitting the at least one message comprising the information for access to at least one serving cell with the terminal device (10), wherein the information is for initiating a transmission at the terminal device using at least a physical random access channel preamble on a physical random access channel resource in at least one serving cell being activated, wherein the at least one serving cell being activated is of type secondary cell or of type primary secondary cell (13).

**12.** An apparatus (14) comprising:

means for receiving, by the apparatus (14) of a communication network, an indication from a terminal device (10) to receive or monitor a physical downlink control channel, PDCCH, order on a physical uplink control channel secondary cell via a primary secondary cell (13) or another serving cell of the communication network;

means for, determining, by the apparatus (14), for the terminal device (10) of the communication network at least one message comprising information to be applied at activation of at least one serving cell of the communication network, wherein the at least one message comprises the PDCCH order; and

means for, based on the indication, transmitting the at least one message comprising the information for access to at least one serving cell with the terminal device (10), wherein the information is for initiating a transmission at the terminal device (10) using a physical random access channel preamble on a physical random access channel resource in at least one serving cell being activated, wherein the at least one serving cell being activated is of type secondary cell or of type primary secondary cell (13).

**13.** The apparatus (14) of claim 12, wherein the at least one serving cell comprises a secondary cell or a primary secondary cell (13).

**14.** The apparatus (14) of any one of claims 12-13, wherein the indication is an indication to provide a physical downlink control channel order via the physical downlink control channel in the at least one serving cell for use by the terminal device (10) to initiate a random access procedure.

**15.** The apparatus (14) of any one of claims 12-14, further comprising:

means for, based on the indication received from the terminal device (10) via a channel state information reporting resource or a medium access control element to receive a physical downlink control channel order from the apparatus (14), transmitting from the network node (14) information comprising the physical downlink control channel order.

**Patentansprüche**

**1.** Verfahren, das Folgendes umfasst:

Übertragen einer Anzeige durch eine Endgerätevorrichtung (10) zu einem Netzwerkknoten eines Kommunikationsnetzwerks zum Empfangen oder Überwachen einer Reihenfolge von physischen Downlinksteuerkanälen, PDCCH, in einer Sekundärzelle eines physischen Uplinksteuerkanals via eine primäre Sekundärzelle (13) oder eine andere bedienende Zelle des Netzwerkknotens (14);

Empfangen von mindestens einer Nachricht, die Informationen umfasst, die bei Aktivierung von mindestens einer bedienenden Zelle des Kommunikationsnetzwerks anzuwenden sind, durch die Endgerätevorrichtung (10) in Reaktion auf das Übertragen der Anzeige vom Netzwerkknoten (14) des Kommunikationsnetzwerks, wobei die mindestens eine Nachricht die PDCCH-Reihenfolge umfasst; und

Anwenden der Informationen für einen Zugang zu mindestens einer bedienenden Zelle, wobei die Informationen dem Initiieren einer Übertragung unter Verwendung einer physischen Direktzugriffskanalpräambel auf einer physischen Direktzugriffskanalressource in mindestens einer bedienenden Zelle, die aktiviert ist, dienen, wobei die mindestens eine bedienende Zelle, die aktiviert ist, von der Art eine Sekundärzelle ist oder von der Art eine primäre Sekundärzelle (13) ist.

**2.** Einrichtung (10), die Folgendes umfasst:

Mittel zum Übertragen einer Anzeige zu einem Netzwerkknoten (14) eines Kommunikationsnetzwerks zum Empfangen oder Überwachen einer Reihenfolge von physischen Downlinksteuerkanälen, PDCCH, in einer Sekundärzelle eines physischen Uplinksteuerkanals via eine primäre Sekundärzelle (13) oder eine andere bedienende Zelle des Netzwerkknotens;

Mittel zum Empfangen von mindestens einer Nachricht, die Informationen umfasst, die bei Aktivierung von mindestens einer bedienenden Zelle des Kommunikationsnetzwerks anzuwenden sind, in Reaktion auf die Anzeige vom Netzwerkknoten (14) des Kommunikationsnetzwerks, wobei die mindestens eine Nachricht die PDCCH-Reihenfolge umfasst; und

Mittel zum Anwenden der Informationen für einen Zugang zur mindestens einen bedienenden Zelle, wobei die Informationen dem Initiieren einer Übertragung unter Verwendung einer physischen Direktzugriffskanalpräambel auf einer physischen Direktzugriffskanalressource in mindestens einer bedienenden Zelle, die aktiviert ist, dienen, wobei die mindestens eine bedienende Zelle, die aktiviert ist, von der Art eine Sekundärzelle ist oder von der Art eine primäre Sekundärzelle (13) ist.

3.  Einrichtung (10) nach Anspruch 2, wobei die mindestens eine bedienende Zelle eine Primärzelle (12) oder eine primäre Sekundärzelle (13) umfasst.

4.  Einrichtung (10) nach einem der Ansprüche 2 bis 3, wobei das Initiieren der Übertragung einem konfliktfreien Direktzugriffskanalzugang dient, darauf basierend, dass die Einrichtung eine erforderliche Downlinkzeit- und Frequenzsynchronisation von der mindestens einen bedienenden Zelle während der Aktivierung erfasst.

5.  Einrichtung (10) nach einem der Ansprüche 2 bis 4, wobei die physische Direktzugriffskanalpräambel auf der physischen Direktzugriffskanalressource vom Kommunikationsnetzwerk für die Einrichtung (10) reserviert ist, um einen konfliktfreien Zugang zu der mindestens einen bedienenden Zelle zu der Zeit, zu der die bedienende Zelle aktiviert ist, zu ermöglichen.

6.  Einrichtung (10) nach einem der Ansprüche 2 bis 5, wobei die mindestens eine Sekundärzelle (13) eine Sekundärzelle (13) eines physischen Uplinksteuerkanals umfasst, und wobei die Übertragung unter Verwendung der physischen Direktzugriffskanalpräambel auf der physischen Direktzugriffskanalressource auf der Sekundärzelle (13) des physischen Uplinksteuerkanals übertragen wird.

7.  Einrichtung (10) nach einem der Ansprüche 2 bis 6, wobei die Anzeige für das Kommunikationsnetzwerk eine Anzeige zum Bereitstellen der Reihenfolge von physischen Downlinksteuerkanälen via den physischen Downlinksteuerkanal in der mindestens einen bedienenden Zelle zur Verwendung durch die Einrichtung zum Initiieren einer Direktzugriffsprozedur ist.

8.  Einrichtung (10) nach einem der Ansprüche 2 bis 7, die ferner Folgendes umfasst:

    Mittel zum Empfangen von Informationen, die die Reihenfolge der physischen Downlinksteuerkanäle umfassen, vom Netzwerkknoten (14) auf Basis der Anzeige, die via eines von einer Kanalzustandsinformationsmelderessource oder einem Medienzugangssteuerelement zum Netzwerkknoten (14) übertragen wird, um die Reihenfolge der physischen Downlinksteuerkanäle zu empfangen; und
    Mittel zum Durchführen einer Direktzugriffsprozedur auf Basis der Informationen für einen Direktzugriff auf mindestens eine bedienende Zelle.

9.  Einrichtung (10) nach Anspruch 8, die ferner Folgendes umfasst:
    Mittel zum Melden von Kanalzustandsinformationen oder ungültigen Kanalzustandsinformationen bei der mindestens einen Sekundärzelle (13) auf Basis des Direktzugriffs.

10. Einrichtung (10) nach Ansprüche 9, wobei das Melden nach Abschluss eines Direktzugriffs für die Aktivierung der mindestens einen Sekundärzelle oder primären Sekundärzelle (13) der bedienenden Zelle durchgeführt wird, wobei die Aktivierung der mindestens einen bedienenden Zelle bei einer Zuordnung eines physischen Uplinksteuerkanals zu einer Sekundärzelle eines physischen Uplinksteuerkanals erfolgt.

11. Verfahren, das Folgendes umfasst:

    Empfangen einer Anzeige durch einen Netzwerkknoten (14) eines Kommunikationsnetzwerks von einer Endgerätevorrichtung (10) zum Empfangen oder Überwachen einer Reihenfolge von physischen Downlinksteuerkanälen, PDCCH, in einer Sekundärzelle eines physischen Uplinksteuerkanals via eine primäre Sekundärzelle (13) oder eine andere bedienende Zelle des Kommunikationsnetzwerks;
    Bestimmen von mindestens einer Nachricht, die Informationen umfasst, die bei Aktivierung von mindestens einer bedienenden Zelle des Kommunikationsnetzwerks anzuwenden sind, durch den Netzwerkknoten (14) für die Endgerätevorrichtung (10), wobei die mindestens eine Nachricht die PDCCH-Reihenfolge umfasst; und
    Übertragen der mindestens einen Nachricht, die die Informationen für einen Zugang mit der Endgerätevorrichtung (10) zu mindestens einer bedienenden Zelle umfasst, auf Basis der Anzeige, wobei die Informationen dem Initiieren einer Übertragung an der Endgerätevorrichtung unter Verwendung von mindestens einer physischen Direktzugriffskanalpräambel auf einer physischen Direktzugriffskanalressource in mindestens einer bedienenden Zelle, die aktiviert ist, dienen, wobei die mindestens eine bedienende Zelle, die aktiviert ist, von der Art eine Sekundärzelle ist oder von der Art eine primäre Sekundärzelle (13) ist.

**12.** Einrichtung (14), die Folgendes umfasst:

Mittel zum Empfangen einer Anzeige durch die Einrichtung (14) eines Kommunikationsnetzwerks von einer Endgerätevorrichtung (10) zum Empfangen oder Überwachen einer Reihenfolge von physischen Downlinksteuerkanälen, PDCCH, in einer Sekundärzelle eines physischen Uplinksteuerkanals via eine primäre Sekundärzelle (13) oder eine andere bedienende Zelle des Kommunikationsnetzwerks;
Mittel zum Bestimmen von mindestens einer Nachricht, die Informationen umfasst, die bei Aktivierung von mindestens einer bedienenden Zelle des Kommunikationsnetzwerks anzuwenden sind, durch die Einrichtung (14) für die Endgerätevorrichtung (10) des Kommunikationsnetzwerks, wobei die mindestens eine Nachricht die PDCCH-Reihenfolge umfasst; und
Mittel zum Übertragen der mindestens einen Nachricht, die die Informationen für einen Zugang mit der Endgerätevorrichtung (10) zu mindestens einer bedienenden Zelle umfasst, auf Basis der Anzeige, wobei die Informationen dem Initiieren einer Übertragung an der Endgerätevorrichtung (10) unter Verwendung von einer physischen Direktzugriffskanalpräambel auf einer physischen Direktzugriffskanalressource in mindestens einer bedienenden Zelle, die aktiviert ist, dienen, wobei die mindestens eine bedienende Zelle, die aktiviert ist, von der Art eine Sekundärzelle ist oder von der Art eine primäre Sekundärzelle (13) ist.

**13.** Einrichtung (14) nach Anspruch 12, wobei die mindestens eine bedienende Zelle eine Sekundärzelle oder eine primäre Sekundärzelle (13) umfasst.

**14.** Einrichtung (14) nach einem der Ansprüche 12 bis 13, wobei die Anzeige eine Anzeige zum Bereitstellen einer Reihenfolge von physischen Downlinksteuerkanälen via den physischen Downlinksteuerkanal in der mindestens einen bedienenden Zelle zur Verwendung durch die Endgerätevorrichtung (10) zum Initiieren einer Direktzugriffsprozedur ist.

**15.** Einrichtung (14) nach einem der Ansprüche 12 bis 14, die ferner Folgendes umfasst:
Mittel zum Übertragen von Informationen, die die Reihenfolge von physischen Downlinksteuerkanälen umfassen, vom Netzwerkknoten (14) auf Basis der Anzeige, die von der Endgerätevorrichtung (10) via eine Kanalzustandsinformationsmelderessource oder ein Medienzugangssteuerelement empfangen wird, um eine Reihenfolge von physischen Downlinksteuerkanälen von der Einrichtung (14) zu empfangen.

**Revendications**

**1.** Procédé, comprenant :

transmettre, par un dispositif terminal (10), une indication à un nœud de réseau d'un réseau de communication pour recevoir ou surveiller un ordre de canal physique de contrôle de liaison descendante, PDCCH, sur une cellule secondaire de canal physique de contrôle de liaison montante via une cellule secondaire primaire (13) ou une autre cellule de desserte du nœud de réseau (14) ;
en réponse à la transmission de l'indication, recevoir, par le dispositif terminal (10), en provenance du nœud de réseau (14) du réseau de communication, au moins un message comprenant des informations à appliquer lors de l'activation d'au moins une cellule de desserte du réseau de communication, dans lequel l'au moins un message comprend l'ordre PDCCH ; et
appliquer les informations pour accéder à au moins une cellule de desserte, dans lequel les informations sont destinées à initier une transmission en utilisant un préambule de canal physique d'accès aléatoire sur une ressource de canal physique d'accès aléatoire dans au moins une cellule de desserte qui est activée, dans lequel l'au moins une cellule de desserte qui est activée est de type cellule secondaire ou de type cellule secondaire primaire (13).

**2.** Appareil (10), comprenant :

des moyens pour transmettre une indication à un nœud de réseau (14) d'un réseau de communication pour recevoir ou surveiller un ordre de canal physique de contrôle de liaison descendante, PDCCH, sur une cellule secondaire de canal physique de contrôle de liaison montante via une cellule secondaire primaire (13) ou une autre cellule de desserte du nœud de réseau ;
des moyens pour, en réponse à l'indication, recevoir du nœud de réseau (14) du réseau de communication au moins un message comprenant des informations à appliquer lors de l'activation d'au moins une cellule de desserte du réseau de communication, dans lequel l'au moins un message comprend l'ordre PDCCH ; et des moyens pour appliquer les informations pour accéder à l'au moins une cellule de desserte, dans lequel les informations sont destinées à initier une transmission en utilisant un préambule de canal physique d'accès aléatoire sur une ressource de canal physique d'accès aléatoire dans au moins une cellule de desserte qui est activée, dans lequel l'au moins une cellule de desserte qui est activée est de type cellule secondaire ou de type cellule secondaire primaire (13).

3. Appareil (10) selon la revendication 2, dans lequel l'au moins une cellule de desserte comprend une cellule primaire (12) ou une cellule secondaire primaire (13).

4. Appareil (10) selon l'une des revendications 2 et 3, dans lequel l'initiation de la transmission est destinée à un accès de canal d'accès aléatoire sans contention sur la base de l'acquisition par l'appareil d'une synchronisation temporelle et fréquentielle de liaison descendante nécessaire à partir de l'au moins une cellule de desserte pendant l'activation.

5. Appareil (10) selon l'une des revendications 2 à 4, dans lequel le préambule de canal physique d'accès aléatoire sur la ressource de canal physique d'accès aléatoire est réservé pour l'appareil (10) par le réseau de communication afin de permettre un accès sans contention à l'au moins une cellule de desserte dans le temps où l'au moins une cellule de desserte est activée.

6. Appareil (10) selon l'une des revendications 2 à 5, dans lequel l'au moins une cellule secondaire (13) comprend une cellule secondaire de canal physique de contrôle de liaison montante (13), et dans lequel la transmission en utilisant le préambule de canal physique d'accès aléatoire sur la ressource de canal physique d'accès aléatoire est transmise sur la cellule secondaire de canal physique de contrôle de liaison montante (13).

7. Appareil (10) selon l'une des revendications 2 à 6, dans lequel l'indication au réseau de communication est une indication pour fournir l'ordre de canal physique de contrôle de liaison descendante via le canal physique de contrôle de liaison descendante dans l'au moins une cellule de desserte pour son utilisation par l'appareil pour initier une procédure d'accès aléatoire.

8. Appareil (10) selon l'une des revendications 2 à 7, comprenant en outre :

des moyens pour, sur la base de l'indication transmise au nœud de réseau (14) via un parmi une ressource de rapport d'informations d'état de canal ou un élément de contrôle d'accès au support pour recevoir l'ordre de canal physique de contrôle de liaison descendante, recevoir du nœud de réseau (14) des informations comprenant l'ordre de canal physique de contrôle de liaison descendante ; et des moyens pour, sur la base des informations, effectuer une procédure d'accès aléatoire pour l'accès aléatoire à au moins une cellule de desserte.

9. Appareil (10) selon la revendication 8, comprenant en outre :
des moyens pour, sur la base de l'accès aléatoire, rapporter des informations d'état de canal ou des informations d'état de canal non valide à au moins une cellule secondaire (13).

10. Appareil (10) selon la revendication 9, dans lequel le rapport est effectué à la fin de l'accès aléatoire pour l'activation de l'au moins une cellule secondaire ou cellule secondaire primaire (13) de la cellule de desserte, dans lequel l'activation de l'au moins une cellule de desserte se fait avec canal physique de contrôle de liaison montante mappé à une cellule secondaire de canal physique de contrôle de liaison montante.

11. Procédé, comprenant les étapes suivantes :

recevoir, par un nœud de réseau (14) d'un réseau de communication, une indication en provenance d'un dispositif terminal (10) pour recevoir ou surveiller un ordre de canal physique de contrôle de liaison descendante, PDCCH, sur une cellule secondaire de canal physique de contrôle de liaison montante via une cellule secondaire primaire (13) ou une autre cellule de desserte du réseau de communication ; déterminer, par le nœud de réseau (14), pour le dispositif terminal (10), au moins un message comprenant des informations à appliquer lors de l'activation d'au moins une cellule de desserte du réseau de communication, dans lequel l'au moins un message comprend l'ordre PDCCH ; et sur la base de l'indication, transmettre l'au moins un message comprenant les informations pour accéder à au moins une cellule de desserte avec le dispositif terminal (10), dans lequel les informations sont destinées à initier une transmission sur le dispositif terminal en utilisant au moins un préambule de canal physique d'accès aléatoire sur une ressource de canal physique d'accès aléatoire dans au moins une cellule de desserte qui est activée, dans lequel l'au moins une cellule de desserte qui est activée est de type cellule secondaire ou de type cellule secondaire primaire (13).

12. Appareil (14) comprenant :

des moyens pour recevoir, par l'appareil (14) d'un réseau de communication, une indication en provenance d'un dispositif terminal (10) pour recevoir ou surveiller un ordre de canal physique de contrôle de liaison descendante, PDCCH, sur une cellule secondaire de canal physique de contrôle de liaison montante via une cellule secondaire primaire (13) ou une autre cellule de desserte du réseau de communication ;
des moyens pour, déterminer, par l'appareil (14), pour le dispositif terminal (10) du réseau de communication, au moins un message comprenant des informations à appliquer lors de l'activation d'au moins une cellule de desserte du réseau de communication, dans lequel l'au moins un message comprend l'ordre PDCCH ; et
des moyens pour, sur la base de l'indication, transmettre l'au moins un message comprenant les informations pour accéder à au moins une cellule de desserte avec le dispositif terminal (10), dans lequel les informations sont destinées à initier une transmission sur le dispositif terminal (10) en utilisant un préambule de canal physique d'accès aléatoire sur une ressource de canal physique d'accès aléatoire dans au moins une cellule de desserte qui est activée, dans lequel l'au moins une cellule de desserte qui est activée est de type cellule secondaire ou de type cellule secondaire primaire (13).

13. Appareil (14) selon la revendication 12, dans lequel l'au moins une cellule de desserte comprend une cellule secondaire ou une cellule secondaire primaire (13).

14. Appareil (14) selon l'une des revendications 12 et 13, dans lequel l'indication est une indication pour fournir un ordre de canal physique de contrôle de liaison descendante via le canal physique de contrôle de liaison descendante dans l'au moins une cellule de desserte pour son utilisation par le dispositif terminal (10) pour initier une procédure d'accès aléatoire.

15. Appareil (14) selon l'une des revendications 12 à 14, comprenant en outre :
des moyens pour, sur la base de l'indication reçue du dispositif terminal (10) via une ressource de rapport d'informations d'état de canal ou un élément de contrôle d'accès au support pour recevoir un ordre de canal physique de contrôle de liaison descendante en provenance de l'appareil (14), transmettre à partir du nœud de réseau (14) des informations comprenant l'ordre de canal physique de contrôle de liaison descendante.

**FIG.1**

**FIG.2**

EP 4 278 699 B1

FIG.3

FIG.4

**FIG.5**

FIG. 6

FIG. 7

FIG.8

910: receiving, by a terminal device, from a network node of a communication network at least one message comprising information to be applied at activation of at least one serving cell of the communication network

920: applying the information for access to at least one serving cell, wherein the information is for initiating a transmission using a physical random access channel preamble on a physical random access channel resource in at least one secondary cell or primary secondary cell of the serving cell being activated

FIG. 9A

950: determining, by a network node, for a terminal device of a communication network at least one message comprising information to be applied at activation of at least one serving cell of the communication network

960: communicating the information for access to at least one serving cell with the terminal device, wherein the information is for initiating a transmission at the terminal device using a physical random access channel preamble on a physical random access channel resource in at least one secondary cell or primary secondary cell of the serving cell being activated

FIG. 9B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20200029383 A

- EP 3132645 A